(19) Europäisches Patentamt
European Patent Office
Office européen des brevets

(11) EP 1 375 594 B1

(12) **FASCICULE DE BREVET EUROPEEN**

(45) Date de publication et mention de la délivrance du brevet:
**14.12.2005 Bulletin 2005/50**

(21) Numéro de dépôt: **03291467.3**

(22) Date de dépôt: **17.06.2003**

(51) Int Cl.[7]: **C08L 77/00**, C08L 77/02, C08L 77/06, C08L 23/08, C08L 23/02, C08L 23/04, C08L 51/06, C08K 3/34, C08K 3/00, C08K 5/521, C08K 13/00

(54) **Compositions ignifugées à base de polyamide et de polyoléfine**

Flammhemmende Zusammensetzungen auf Basis von Polyamid und Polyolefin

Flame retardant compositions based on polyamide and polyolefine

(84) Etats contractants désignés:
**AT BE BG CH CY CZ DE DK EE ES FI FR GB GR HU IE IT LI LU MC NL PT RO SE SI SK TR**

(30) Priorité: **24.06.2002 FR 0207780**

(43) Date de publication de la demande:
**02.01.2004 Bulletin 2004/01**

(73) Titulaire: **Arkema**
**92800 Puteaux (FR)**

(72) Inventeurs:
- **Blondel, Philippe**
  **27300 Bernay (FR)**
- **Brule, Benoit**
  **27300 Bernay (FR)**
- **Frenois, Nicolas**
  **69300 Clemont Ferrand (FR)**
- **Flat, Jean-Jacques**
  **27170 Goupilleres (FR)**

(74) Mandataire: **Neel, Henry**
**ARKEMA**
**Département Propriété Industrielle**
**4-8, cours Michelet,**
**La Défense 10**
**92091 Paris La Défense Cedex (FR)**

(56) Documents cités:
**EP-A- 0 427 173** **EP-A- 0 629 678**

- **DATABASE WPI Section Ch, Week 200202 Derwent Publications Ltd., London, GB; Class A23, AN 2002-013362 XP002237850 & JP 2001 207053 A (SANKYO JUKI GOSEI KK), 31 juillet 2001 (2001-07-31)**
- **PATENT ABSTRACTS OF JAPAN vol. 010, no. 043 (C-329), 20 février 1986 (1986-02-20) & JP 60 192742 A (TOYO SODA KOGYO KK), 1 octobre 1985 (1985-10-01)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 375 594 B1

Printed by Jouve, 75001 PARIS (FR)

## Description

### *[Domaine de l'invention]*

La présente invention concerne des compositions ignifugées à base de polyamide et de polyoléfine et plus particulièrement des compositions thermoplastiques à base de polyamide et de polyoléfine contenant un agent ignifugeant un plastifiant phosphoré et une zéolithe. Ces compositions sont utiles pour isoler et protéger des câbles électriques, des fibres optiques et pour mouler des boitiers et connecteurs électriques.

Les polymères thermoplastiques tels que les polyéthylènes, les polyamides ou leurs mélanges sont de bons isolants électriques et sont faciles à mettre en oeuvre. Ils sont utilisés pour faire des boîtiers et des connecteurs électriques et aussi des revêtements de câbles. Les installations électriques peuvent être à l'origine de courts circuits et s'enflammer, elles peuvent être aussi mises au contact d'une flamme et donc s'enflammer et propager l'incendie le long des chemins de câbles. Il existe différents additifs pour rendre ces matières ininflammables, certains à base de produits halogénés, d'autres sans halogènes. L'usage des additifs halogénés est de plus en plus banni pour des questions d'écotoxicologie et de toxicologie (toxicité et corrosivité des vapeurs émises lors des incendies). La présente invention concerne des compositions ignifugées sans halogènes.

### *[L'art antérieur et le problème technique]*

**EP 629 678** décrit des mélanges de polyamide et de polypropylène dans lesquels on ajoute une zéolithe et du polyphosphate d'ammonium (agent déshydratant) pour les rendre ignifuges. Les mélanges de polyamide et de polyoléfine sont constitués (en poids) de 57 % de polyamide 6 (PA 6), 33 % d'un homopolymère du propylène et 10 % d'un polypropylène greffé par l'anhydride maléique puis condensé avec un oligomère mono aminé de polyamide. On a ajouté 30 parties (en poids) de polyphosphate d'ammonium (APP) et 1 partie de zéolithe dans 69 parties des mélanges précédents puis on a injecté des éprouvettes d'épaisseur 3,2 mm. On a pratiqué sur ces éprouvettes les tests de réaction au feu UL 94 selon la norme NFT 51072, le classement V0 a été obtenu. V0 est le meilleur classement selon ce test. Il correspond à un matériau difficilement inflammable, ne produisant pas de gouttes enflammées lors du test. Pour V1, le matériau est plus facilement inflammable mais ne produit pas de gouttes enflammés lors du test. Quant au classement V2, en plus de l'inflammabilité plus facile que pour V0, des gouttes enflammées peuvent se produire lors du test. Ces mélanges ne contiennent pas de plastifiant phosphoré.

Le brevet **EP 704489** décrit des compositions constituées d'une matrice en polyamide dans laquelle sont dispersés des nodules de polyoléfine réticulée et des ignifugeants choisis parmi l'hydroxyde de magnésium, le décabromodiphénylether, le cyanurate de mélamine et le pentaérithritol. Ces compositions sont utiles pour gainer des câbles électriques. Elles ne contiennent pas de plastifiant phosphoré ni de zéolithe.

L'article **Le Bras et al, Polymer, 41, 5283-96, (2000)** décrit des mélanges de PA 6, d'EVA (copolymère d'éthylène et d'acétate de vinyle) et de polyphosphate d'ammonium (APP). Ils ne contiennent pas de plastifiant phosphoré ni de zéolithe.

La demande de brevet **JP 11236472 A** publiée le 31 août 1999 décrit des mélanges non compatibilisés de PA et de PP renforcés choc non plastifiés et ignifugés par des mélanges à base d'APP mais ne contenant pas de zéolithes.

La demande de brevet **JP 11302512 A** publiée le 2 novembre 1999 décrit des PA modifiés choc renforcés par des fibres et ignifugés par des esters de l'acide phosphorique. Ces PA modifiés ne contiennent pas de zéolithes.

La demande de brevet **JP 2000160031 A** publiée le 13 juin 2000 décrit des mélanges thermoplastiques non compatibilisés à base de PA contenant de l'APP, du triphenyl phosphate éventuellement substitué sur les cycles aromatiques, des esters de $PO_3H_2$ et/ou du phosphore rouge revêtu, du cyanurate de mélamine, du borate de zinc et des agents de couplage de type silane. Ces mélanges ne contiennent pas de zéolithe.

Toutefois les performances de tenue au feu des compositions de l'art antérieur sont généralement obtenues au détriment de la ductilité des matériaux (perte considérable d'allongement à la rupture, caractère fragile en choc à température ambiante). Par ailleurs, nous avons également montré que la stabilité thermique de ces matériaux était insuffisante. Par stabilité thermique, on entend la conservation des propriétés mécaniques (et plus particulièrement l'allongement à la rupture) après divers vieillissements thermiques (par exemple 1 semaine à 120°C dans l'air chaud). Le but de l'invention est de trouver des mélanges de polyamide et de polyoléfine ignifugés sans halogène, performants au test UL94 mais possédant également des propriétés mécaniques de bon niveau en terme de traction et de choc ainsi qu'une bonne stabilité thermique. On a trouvé que le mélange de polyamide et de polyoléfine devait nécessairement comprendre un ignifugeant, un plastifiant phosphoré et une zéolithe.

*[Brève description de l'invention]*

On a trouvé de nouvelles compositions ignifugées à base de polyamide et de polyoléfine qui présentent un classement V0 ou V1 selon le test UL94-VB quand on fait le test au feu sur des éprouvettes d'épaisseur 1,6 mm.

La présente invention concerne des compositions ignifugées comprenant, en poids, le total étant 100 parties :

50 à 75 parties d'un mélange de polyamide (A) et de polyoléfine (B),
25 à 50 parties d'un mélange comprenant :

0,1 à 48,8 parties d'un agent ignifugeant,
0,1 à 30 parties d'un plastifiant phosphoré,
0,1 à 10 parties d'une zéolithe,

le total de ces 3 produits étant compris entre 25 et 50.

Selon une forme avantageuse elles comprennent, en poids, le total étant 100 parties :

55 à 75 parties d'un mélange de polyamide (A) et de polyoléfine (B),
25 à 45 parties d'un mélange comprenant :

0,1 à 25 parties (de préférence 16 à 25) d'un agent ignifugeant,
0,1 à 15 parties (de préférence 8 à 15) d'un plastifiant phosphoré,
0,1 à 5 parties (de préférence 1 à 5) d'une zéolithe.

le total de ces 3 produits étant compris entre 25 et 45.

Selon une autre forme avantageuse elles comprennent, en poids, le total étant 100 parties :

65 à 75 parties d'un mélange de polyamide (A) et de polyoléfine (B),
25 à 35 parties d'un mélange comprenant :

0,1 à 20 parties (de préférence 16 à 20) d'un agent ignifugeant,
0,1 à 12 parties (de préférence 8 à 12) d'un plastifiant phosphoré,
0,1 à 3 parties (de préférence 1 à 3) d'une zéolithe.

le total de ces 3 produits étant compris entre 25 et 35.

Ces compositions ont de nombreux avantages en particulier l'allongement à la rupture mesuré selon ISO R 527-1 B sur des éprouvettes de type IFC (Institut francais du caoutchouc) excède 100% et est avantageusement compris entre 250 et 400%. Quant à la résistance au choc, elles présentent un comportement non fragile en choc multiaxial à température ambiante selon ISO 6603-2 (à une vitesse de 7.7 m/s). Les compositions de l'invention conservent au moins 50% de leurs propriétés mécaniques après un veillissement de 7 jours à 120°C dans l'air chaud.

Ces compositions sont utiles pour isoler et protéger des câbles électriques, des fibres optiques et pour mouler des boitiers et connecteurs électriques.

**[*Description détaillée de l'invention*]**

**S'agissant du mélange de polyamide (A) et de polyoléfine (B) on entend par polyamide** les produits de condensation :

- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6 et le PA 6-6.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le β, β-diméthylpropriolactame, le α,α-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque $HOOC-(CH_2)_{10}-COOH$.

La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12).

Avantageusement le copolyamide est choisi parmi le PA 6 / 12 et le PA 6 / 6-6.

On peut utiliser des mélanges de polyamide. Avantageusement la viscosité relative des polyamides, mesurée en solution à 1 % dans l'acide sulfurique à 20°C, est comprise entre 1,5 et 5.

On ne sortirait pas du cadre de l'invention en remplaçant une partie du polyamide (A) par un copolymère à blocs polyamide et blocs polyether, c'est à dire en utilisant un mélange comprenant au moins un des polyamides précédents et au moins un copolymère à blocs polyamide et blocs polyether.

Les copolymères à blocs polyamides et blocs polyéthers résultent de la copolycondensation de séquences polyamides à extrémités réactives avec des séquences polyéthers à extrémités réactives, telles que, entre autres :

1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatique appelées polyétherdiols.
3) Séquences polyamides à bouts de chaînes dicarboxyliques avec des polyétherdiols, les produits obtenus étant, dans ce cas particulier, des polyétheresteramides. On utilise avantageusement ces copolymères.

Les séquences polyamides à bouts de chaînes dicarboxyliques proviennent, par exemple, de la condensation d'acides alpha-oméga aminocarboxyliques, de lactames ou de diacides carboxyliques et diamines en présence d'un diacide carboxylique limiteur de chaîne.

Le polyéther peut être par exemple un polyéthylène glycol (PEG), un polypropylène glycol (PPG) ou un polytétra méthylène glycol (PTMG). Ce dernier est aussi appelé polytétrahydrofurane (PTHF).

La masse molaire en nombre $\overline{Mn}$ des séquences polyamides est comprise entre 300 et 15 000 et de préférence entre 600 et 5 000. La masse $\overline{Mn}$ des séquences polyéther est comprise entre 100 et 6 000 et de préférence entre 200 et 3 000.

Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-oméga amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont répartis de façon statistique le long de la chaîne polymère.

Ces polymères à blocs polyamides et blocs polyéthers qu'ils proviennent de la copolycondensation de séquences polyamides et polyéthers préparées auparavant ou d'une réaction en une étape présentent, par exemple,

des duretés shore D pouvant être comprises entre 20 et 75 et avantageusement entre 30 et 70 et une viscosité inhérente entre 0,8 et 2,5 mesurée dans le métacrésol à 25°C pour une concentration initiale de 0,8 g/100 ml. Les MFI peuvent être compris entre 5 et 50 (235°C sous une charge de 1 kg)

Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Des polymères à blocs polyamides et polyéthers sont décrits dans les brevets US 4 331 786, US 4 115 475, US 4 195 015, US 4 839 441, US 4 864 014, US 4 230 838 et US 4 332 920.

Le rapport de la quantité de copolymère à blocs polyamide et blocs polyether sur la quantité de polyamide est, en poids, compris avantageusement entre 10 / 90 et 60 / 40. On peut citer par exemple les mélanges de (i) PA 6 et (ii) copolymère à blocs PA 6 et blocs PTMG et des mélanges de (i) PA 6 et (ii) copolymère à blocs PA 12 et blocs PTMG.

Avantageusement le polyamide est tel que sa température de fusion est inférieure à 230°C. On utilise avantageusement le PA 6.

**Quant à la polyoléfine (B) du mélange de polyamide (A) et de polyoléfine (B)** elle peut être fonctionnalisée ou non fonctionnalisée ou être un mélange d'au moins une fonctionnalisée et/ou d'au moins une non fonctionnalisée. Pour simplifier on a décrit ci dessous des polyoléfines fonctionnalisées (B1) et des polyoléfines non fonctionnalisées (B2).

Une polyoléfine non fonctionnalisée (B2) est classiquement un homo polymère ou copolymère d'alpha oléfines ou de dioléfines, telles que par exemple, éthylène, propylène, butène-1, octène-1, butadiène. A titre d'exemple, on peut citer :

- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40% en poids.

La polyoléfine fonctionnalisée (B1) peut être un polymère d'alpha oléfines ayant des motifs réactifs (les fonctionnalités) ; de tels motifs réactifs sont les fonctions acides, anhydrides, ou époxy. À titre d'exemple, on peut citer les polyoléfines précédentes (B2) greffées ou co- ou ter polymérisées par des époxydes insaturés tels que le (méth) acrylate de glycidyle, ou par des acides carboxyliques ou les sels ou esters correspondants tels que l'acide (méth) acrylique (celui-ci pouvant être neutralisé totalement ou partiellement par des métaux tels que Zn, etc.) ou encore par des anhydrides d'acides carboxyliques tels que l'anhydride maléique. Une polyoléfine fonctionnalisée est par exemple un mélange PE/EPR, dont le ratio en poids peut varier dans de larges mesures, par exemple entre 40/60 et 90/10, ledit mélange étant cogreffé avec un anhydride, notamment anhydride maléique, selon un taux de greffage par exemple de 0,01 à 5% en poids.

La polyoléfine fonctionnalisée (B1) peut être choisie parmi les (co)polymères suivants, greffés avec anhydride maléique ou méthacrylate de glycidyle, dans lesquels le taux de greffage est par exemple de 0,01 à 5% en poids :

- du PE, du PP, des copolymères de l'éthylène avec propylène, butène, hexène, ou octène contenant par exemple de 35 à 80% en poids d'éthylène ;
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- des copolymères éthylène et acétate de vinyle (EVA), contenant jusqu'à 40% en poids d'acétate de vinyle ;
- des copolymères éthylène et (méth)acrylate d'alkyle, contenant jusqu'à 40% en poids de (méth)acrylate d'alkyle ;
- des copolymères éthylène et acétate de vinyle (EVA) et (méth)acrylate d'alkyle, contenant jusqu'à 40% en poids

de comonomères .

La polyoléfine fonctionnalisée (B1) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (B1) peut aussi être un co- ou ter polymère d'au moins les motifs suivants : (1) éthylène, (2) (méth)acrylate d'alkyle ou ester vinylique d'acide carboxylique saturé et (3) anhydride tel que anhydride maléique ou acide (méth)acrylique ou époxy tel que (méth)acrylate de glycidyle.

A titre d'exemple de polyoléfines fonctionnalisées de ce dernier type, on peut citer les copolymères suivants, où l'éthylène représente de préférence au moins 60% en poids et où le ter monomère (la fonction) représente par exemple de 0,1 à 10% en poids du copolymère :

- les copolymères éthylène/(méth)acrylate d'alkyle / acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle / acide (méth)acrylique ou anhydride maléique ou méthacrylate de glycidyle.

Dans les copolymères qui précèdent, l'acide (méth)acrylique peut être salifié avec Zn ou Li.

Le terme "(méth)acrylate d'alkyle" dans (B1) ou (B2) désigne les méthacrylates et les acrylates d'alkyle en C1 à C8, et peut être choisi parmi l'acrylate de méthyle, l'acrylate d'éthyle, l'acrylate de n-butyle, acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (B1) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci ou les mélanges d'au moins deux polyoléfines fonctionnalisées pouvant réagir entre elles.

Les copolymères mentionnés ci-dessus, (B1) et (B2), peuvent être copolymérisés de façon statistique ou séquencée et présenter une structure linéaire ou ramifiée.

Le poids moléculaire, l'indice MFI, la densité de ces polyoléfines peuvent aussi varier dans un large mesure, ce que l'homme de l'art appréciera. MFI, abréviation de Melt Flow Index, est l'indice de fluidité à l'état fondu. On le mesure selon la norme ASTM 1238.

Avantageusement les polyoléfines (B2) non fonctionnalisées sont choisies parmi les homopolymères ou copolymères du polypropylène et tout homo polymère de l'éthylène ou copolymère de l'éthylène et d'un comonomère de type alpha oléfinique supérieur tel que le butène, l'hexène, l'octène ou le 4-méthyl 1-Pentène. On peut citer par exemple les PP, les PE de haute densité, PE de moyenne densité, PE basse densité linéaire, PE basse densité, PE de très basse densité. Ces polyéthylènes sont connus par 1'Homme de l'Art comme étant produits selon un procédé « radicalaire », selon une catalyse de type « Ziegler » ou, plus récemment, selon une catalyse dite « métallocène ».

Avantageusement les polyoléfines fonctionnalisées (B1) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les ter polymères de l'éthylène, d'acrylate d'alkyle et d'anhydride maléique ou de méthacrylate de glycidyle comme les Lotader® de la Demanderesse ou des polyoléfines greffées par de l'anhydride maléique comme les Orevac® de la Demanderesse ainsi que des ter polymères de l'éthylène, d'acrylate d'alkyle et d'acide (meth) acrylique. On peut citer aussi les homopolymères ou copolymères du polypropylène greffés par un anhydride d'acide carboxylique puis condensés avec des polyamides ou des oligomères mono aminés de polyamide.

Le MFI de (A), les MFI de (B1) et (B2) peuvent être choisis dans une large plage il est cependant recommandé pour faciliter la dispersion de (B) que le MFI de (A) soit plus grand que celui de (B).

Pour de faibles proportions de (B), par exemple 10 à 15 parties, il est suffisant d'utiliser une polyoléfine (B2) non fonctionnalisée. La proportion de (B2) et (B1) dans la phase (B) dépend de la quantité de fonctions présentes dans (B1) ainsi que de leur réactivité. Avantageusement on utilise des rapports en poids (B1)/(B2) allant de 5/35 à 15/25. On peut aussi n'utiliser qu'un mélange de polyoléfines (B1) pour obtenir une réticulation.

**Selon une première forme préférée de l'invention** la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

Selon une variante de cette première forme de l'invention la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi

les élastomères, les polyéthylènes de très basse densité et les copolymères de l'éthylène.

**Selon une deuxième forme préférée de l'invention** la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

**Selon une troisième forme préférée de l'invention** la polyoléfine (B) comprend (i) un polyéthylène de type EVA, LLDPE , VLDPE ou metallocene et (ii) un copolymère éthylène-(meth)acrylate d'alkyle -anhydride maléique.

**Selon une quatrième forme préférée de l'invention** la polyoléfine comprend deux polymères fonctionnalisés comprenant au moins 50 % en moles de motifs éthylène et pouvant réagir pour former une phase réticulée. Selon une variante le polyamide (A) est choisi parmi les mélanges de (i) polyamide et (ii) copolymère à blocs PA 6 et blocs PTMG et les mélanges de (i) polyamide et (ii) copolymère à blocs PA 12 et blocs PTMG; le rapport des quantités de copolymère et de polyamide en poids étant compris entre 10/90 et 60/40.

**S'agissant de la première forme** les proportions sont avantageusement les suivantes (en poids) :

60 à 70 % de polyamide,
5 à 15 % du mélange de (C1) et (C2) cogreffé

le complément en polyéthylène haute densité.

S'agissant du polyéthylène haute densité sa densité est avantageusement comprise entre 0,940 et 0,965 et le MFI entre 0.1 et 5 g/10 min. (190°C 2,16 kg).

Le polyéthylène (C1) peut être choisi parmi les polyéthylènes cités plus haut. Avantageusement (C1) est un polyéthylène haute densité (HDPE) de densité comprise entre 0,940 à 0,965. Le MFI de (C1) est (sous 2,16 kg - 190°C) entre 0,1 et 3 g/10 min.

Le copolymère (C2) peut être par exemple un élastomère éthylène propylène (EPR) ou éthylène / propylène / diène (EPDM). (C2) peut être aussi un polyéthylène de très basse densité (VLDPE) qui est soit un homopolymère de l'éthylène, soit un copolymère de l'éthylène et d'une alpha oléfine. (C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides. Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide. Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés. Ces monomères de greffage comprennent par exemple les acides maléique, fumarique, itaconique, citraconique, allylsuccinique, cyclohex-4-ène-1 ,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1 ,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2). Par exemple, ceci peut être réalisé en chauffant les polymères (C1) et (C2) à température élevée, environ 150° à environ 300°C, en présence ou en l'absence d'un solvant avec ou sans générateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés. La quantité du monomère greffé est déterminée par dosage des fonctions succiniques par spectroscopie IRTF. Le MFI de (C1) et (C2) ayant été cogreffés est de 5 à 30 g/ 10 min. (190°C - 2,16 kg) de préférence 13 à 20.

Avantageusement le mélange de (C1) et (C2) cogreffés, est tel que le rapport $MFI_{10}$ / $MFI_2$ est supérieur à 18,5, $MFI_{10}$ désignant l'indice d'écoulement à 190°C sous une charge de 10 kg et $MFI_2$ l'indice sous une charge de 2,16 kg. Avantageusement le $MFI_{20}$ du mélange des polymères (C1) et (C2) cogreffés est inférieur à 24. $MFI_{20}$ désigne l'indice d'écoulement à 190°C sous une charge de 21,6 kg.

S'agissant de la variante de la première forme les proportions sont avantageusement les suivantes (en poids) :

60 à 70 % de polyamide,

5 à 10 % de (C2) greffé,
5 à 10% de (C'2)

le complément en polyéthylène haute densité.

(C2) est avantageusement un EPR ou un EPDM, (C'2) est avantageusement un EPR contenant en poids 70 à 75% d'éthylène.

**S'agissant de la deuxième forme de l'invention** les proportions sont avantageusement les suivantes (en poids) :

60 à 70 % de polyamide,
20 à 30 % de polypropylène
3 à 10 % d'une polyoléfine qui résulte de la réaction d'un polyamide (C4) avec un copolymère (C3) comprenant du propylène et un monomère insaturé X, greffé ou copolymérisé.

Le MFI du polypropylène est avantageusement inférieur à 0,5 g/10 min (230°C-2,16 kg) et de préférence compris entre 0,1 et 0,5. De tels produits sont décrits dans EP 647681.

On décrit maintenant le produit greffé de cette deuxième forme de l'invention. On commence par préparer (C3) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être par exemple un acide carboxylique, un anhydride d'acide dicarboxylique ou un epoxyde. A titre d'exemple de monomère X on peut citer l'acide (méth)acrylique, l'anhydride maléique et les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Avantageusement (C3) est tel que X est greffé. Le greffage est une opération connue en soi.

(C4) est un polyamide ou un oligomère de polyamide. Des oligomères de polyamide sont décrits dans EP 342066 et FR 2291225. Les polyamides (ou oligomères) (C4) sont les produits de condensation des monomères déjà cités plus haut. On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6). Les polyamides ou oligomères (C4) peuvent être à terminaisons acides, aminé ou monoamine. Pour que le polyamide ait une terminaison monoamine il suffit d'utiliser un limiteur de chaîne de formule

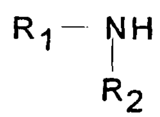

dans laquelle :

$R_1$ est l'hydrogène ou un groupement alkyle linéaire ou ramifié contenant jusqu'à 20 atomes de carbone,
$R_2$ est un groupement ayant jusqu'à 20 atomes de carbone alkyle ou alcenyle linéaire ou ramifié, un radical cycloaliphatique saturé ou non, un radical aromatique ou une combinaison des précédents. Le limiteur peut être par exemple la laurylamine ou l'oleylamine.

Avantageusement (C4) est un PA-6, un PA-11 ou un PA-12. La proportion de C4 dans C3 + C4 en poids est avantageusement comprise entre 0,1 et 60 %. La réaction de (C3) avec (C4) s'effectue de préférence à l'état fondu. On peut par exemple malaxer (C3) et (C4) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

**S'agissant de la troisième forme** les proportions sont avantageusement les suivantes (en poids) :

60 à 70 % de polyamide,
5 à 15 % d'un copolymère éthylène -(meth)acrylate d'alkyle -anhydride maléique.

le complément est un polyéthylène de type EVA, LLDPE , VLDPE ou metallocene; avantageusement la densité du polyethylene LLDPE, VLDPE ou métallocene est comprise entre 0,870 et 0,925, et le MFI est compris entre 0,1 et 5 (190°C - 2.16 kg).

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

**S'agissant de la quatrième forme** les proportions sont avantageusement les suivantes (en poids) :

40 à 95 % de polyamide,
60 à 5 % d'un mélange d'un copolymère éthylène -(meth)acrylate d'alkyle-anhydride maléique et d'un copolymère éthylène -(meth)acrylate d'alkyle-methacrylate de glycidyle.

Avantageusement les copolymères éthylène - (méth)acrylate d'alkyle - anhydride maléique comprennent de 0,2 à 10 % en poids d'anhydride maléique, jusqu'à 40 % et de préférence 5 à 40 % en poids de (méth)acrylate d'alkyle. Leur MFI est compris entre 2 et 100 (190°C - 2,16 kg). Les (méth)acrylates d'alkyle ont déjà été décrits plus haut. La température de fusion est comprise entre 80 et 120°C. Ces copolymères sont disponibles dans le commerce. Ils sont produits par polymérisation radicalaire à une pression pouvant être comprise entre 200 et 2500 bars.

Le copolymère éthylène/(méth)acrylate d'alkyle/ methacrylate de glycidyle peut contenir jusqu'à 40% en poids de (méth)acrylate d'alkyle, avantageusement de 5 à 40 % et jusqu'à 10% en poids d'époxyde insaturé, de préférence 0,1 à 8%.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle. La quantité de (méth)acrylate d'alkyle est de préférence de 20 à 35%. Le MFI est avantageusement compris entre 5 et 100 (en g/10 min à 190°C sous 2,16 kg), la température de fusion est comprise entre 60 et 110°C. Ce copolymère peut être obtenu par polymérisation radicalaire des monomères.

On peut ajouter des catalyseurs pour accélérer la réaction entre les fonctions époxy et anhydride, parmi les composés capables d'accélérer la réaction entre la fonction epoxy et la fonction anhydride on peut citer notamment :

- des aminés tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthyléthylhydrazine, la N,N-diméthylpipérazine, la N,N,N',N'-tétraméthyl-1,6-hexanediamine, un mélange d'aminés tertiaires ayant de 16 à 18 carbones et connues sous l'appellation de diméthylsuifamine,
- des phosphines tertiaires telles que la triphénylphosphine
- des alkyldithiocarbamates de zinc.
- des acides.

On ne sortirait pas du cadre de l'invention si une partie du copolymère éthylène-(meth)acrylate d'alkyle-anhydride maleique est remplacée par un copolymère éthylène-acide acrylique ou un copolymère éthylène -anhydride maleique l'anhydride maleique ayant été en tout ou partie hydrolysé. Ces copolymères peuvent aussi comprendre un (meth) acrylate d'alkyle. cette partie peut représenter jusqu'à 30% du copolymère éthylène-(meth)acrylate d'alkyle-anhydride maleique.

**S'agissant de l'agent ignifugeant** ce sont des composés susceptibles de former au moment de la combustion des acides tels que $H_3PO_4$ , $H_3PO_3$ et $H_4P_2O_7$ . A titre d'illustration de tels agents, on peut citer les phosphates, les pyrophosphates et polyphosphates d'ammonium, les phosphates de mélamine, le phosphite de mélamine, le phosphite et le diphosphite de pipérazine, le phosphate de guanazole, le pyrophoshate de mélamine et le pyrophosphate de pipérazine. On utilise avantageusement les polyphosphates d'ammonium de formule $(NH_4)_{n+2}P_nO_{3n+1}$ dans laquelle n représente un nombre entier supérieur ou égal à 2. Le polyphosphate d'ammonium peut être encapsulé dans une résine à base de mélamine. On ne sortirait pas du cadre de l'invention en utilisant un mélange d'agents ignifugeants. L'agent ignifugeant peut être fonctionnalisé par exemple il peut porter des fonctions silanes.

**S'agissant du plastifiant phosphoré** on peut citer les esters de l'acide phosphorique. A titre d'exemple on peut citer le phosphate d'isopropylphényl, le phosphate de diphényle et le phosphate de triphényle.

**S'agissant des zéolithes,** elles sont décrites dans ULLMANN'S Encyclopedia of Industrial Chemistry, 1996, 5th édition, Vol 28 pages 475-504. On peut utiliser les zéolithes de type A, X, Y, L, ZSM, ZM ou aussi les zéolithes naturelles telles que la chabazite, la mordénite et la faujasite. On utilise avantageusement les zéolithes de type 3A, 4A, 5A, 10X et 13X. On ne sortirait pas du cadre de l'invention en utilisant un mélange de zéolithes.

Les zéolithes sont généralement utilisées sous forme de poudre de plus d'un µm et de préférence entre 2 et 50 µm.

On ne sortirait pas du cadre de l'invention en substituant ces zéolithes par des additifs minéraux connus sous la dénomination "capteur d'acide". A titre d'exemple on peut citer le DHT 4A de la société KYOWA Chemical.

On ne sortirait pas du cadre de l'invention en substituant le PA par un PA modifié par des charges minérales ou organiques de taille nanométrique connu sous la dénomination de « PA nanocomposite ». Dans ce cas on peut réduire la proportion de l'ignifugeant en se placant dans la partie basse de la fourchette.

En plus des trois produits précédents on peut ajouter tout additif sans halogène bien connu de l'homme de l'Art dans le domaine des PA comme des cyanurates de mélamine, des pyrophosphates de mélamine, des agents anti goutte de nature siliconée ou fluorée.

Les compositions selon l'invention peuvent renfermer en outre au moins un additif choisi parmi :

- les colorants ;
- les pigments ;
- les azurants ;
- les anti-oxydants ;
- les stabilisants UV.

Les compositions de l'invention sont préparées soit par mélange de tous les ingrédients (A, B, ignifugeant, plastifiant phosphoré, zéolithe) dans un procédé dit « en direct », soit en ajoutant l'agent ignifugeant, le plastifiant phosphoré et la zéolithe au mélange A/B déjà préparé.

On utilise avantageusement les dispositifs habituels de mélange et de malaxage de l'industrie des thermoplastiques tels que les extrudeuses et les malaxeurs, par exemple les co-malaxeurs BUSS®. Dans ce second procédé (dit « par reprise »), les trois ingrédients (A+B, ignifugeant, plastifiant phosphoré, zéolithe) peuvent être soit mélangés à sec et introduits dans la trémie d'alimentation ou alors l'ignifugeant et le plastifiant phosphoré mélangés à la zéolithe peuvent être introduits par gavage latéral dans le mélange A/B préalablement fondu.

Il est recommandé que la préparation des compositions de l'invention (le compoundage) et leur mise en oeuvre soient faites dans les conditions les plus douces possible en terme de température et de taux de cisaillement. Pour ce faire, on peut se reporter à la référence : O. Schacker, Plastics Additives and Compounding, April 2002, pages 28-33.

**[*Exemples*]**

**Produits utilisés :**

Orgalloy® LE6000 : Alliage de PA6 et de LLDPE possédant un MFI de 2 (235°C, 2.16 kg) produit par la société ATOFINA ;

PA 6 B3 : PA6 de MFI 17 à 23 (à 235°C sous 2,16kg) produit par la société BASF sous le nom Ultramid B3® ;

PA 6 B4 : PA6 de MFI 1,5 à 3 (à 235°C sous 2,16kg) produit par la société BASF sous le nom Ultramid B4® ;

LL 7209 AA : LLDPE possédant une densité de 0.920 kg/l et un MFI de 1 (190°C, 2.16 kg) vendu sous le nom Innovex® LL 7209 AA produit par la société BP Chemicals ;

EVA 2403 : Copolymère d'éthylène et d'acétate de vinyle (EVA) comprenant 24% en poids d'acétate et un MFI de 3 (190°C, 2.16 kg) vendu par la société ATOFINA sous le nom EVATANE® 2403 ;

Lotader® 3210 : Terpolymère d'éthylène, acrylate de butyle et anhydride maléique possédant un MFI de 5 (190°C, 2.16 kg) comprenant 6% en poids d'acrylate et 3% d'anhydride maleique vendu par la société ATOFINA ;

Lotader® 4700 : Terpolymère d'éthylène, acrylate d'éthyle et anhydride maléique possédant un MFI de 7 (190°C, 2.16 kg) comprenant 30% en poids d'acrylate et 1,5% d'anhydride maleique vendu par la société ATOFINA ;

Lotader® AX8900 : Terpolymère d'éthylène, acrylate de méthyle et méthacrylate de glycidyle possédant un MFI de 6 (190°C, 2.16 kg) comprenant 25% en poids d'acrylate et 8% de méthacrylate de glycidyle vendu par la société ATOFINA ;

Lucalène® 3110 : Copolymère éthylène / acrylate de butyle / acide acrylique de composition en poids 88/8/4 vendu par BASF ;

Platamid® MX 1937 : Copolyamide à base de caprolactame, lauryllactame, acide aminoundecanoique (C11) et polyethyléneglycol possédant un point de fusion de 105-115°C et un MFI de 19 (150°C, 2,16kg) produit par la société ATOFINA ;

FR Cross 484F : Polyphosphate d'ammonium possédant un diamètre moyen de particules de 8 µm produit par la société Buddenheim ;

Exolit® AP 422 : désigne le Polyphosphate d'Ammonium microencapsulé avec une résine mélamine, commercialisé par la Société CLARIANT ;

Paraloïd® EXL 3611 : Modifiant choc acrylique sous forme de particules coeur écorce produit par la société Rohm et Haas ;

Phosphflex® 31L : Phosphate d'isopropyl phényle et de diphényle produit par la société Akzo ;

Phosflex® TPP : Phosphate de triphényle produit par la société Akzo ;
DHT 4A : capteur minéral d'acide vendu par KYOWA Chemical ;
Siliporite® NK10AP : Zéolithe de type 4 Angstroem produit par la société CECA ;
Anti 51 : désigne un antioxydant l'IRGANOX® 1098 de CIBA ;
Anti 82 : désigne l'HOSTANOX PAR 24 de HOECHST ;
Iodine P201: désigne un stabilisant thermique à base d'iodure de cuivre et de potassium vendu par la société CIBA ;

**2. Préparation des matériaux ignifugés**

Les formulations décrites ci-dessous sont préparées par compoundage grâce à une extrudeuse corotative engrenante auto nettoyante de type Werner et Pfleiderer® ZSK 40 (diamètre : 40 mm, Longueur : 42D) à 240-250°C.

**3. Tests effectués**

Traction : mesure de la contrainte et l'allongement à la rupture selon la norme ISO R527-1 B sur éprouvettes IFC (Institut francais du caoutchouc) après conditionnement de deux semaines à 23°C et 50% RH (Relative Humidity).
Mesure de la résistance au choc multiaxial à température ambiante selon ISO 6603-2 à une vitesse de 7.7 m/s.
Test feu : classement des matériaux selon UL94 - VB
Mesure de fluidité (MFI) à 235°C sous 2.16 kg selon ASTM 1238

**3. Résultats**

Ils sont sur les tableaux 1 et 2. Les compositions sont en poids.

Tableau 1

| | Ex 1 | Ex 2 | Ex 3 3 | Ex 4 4 | Ex 5 |
|---|---|---|---|---|---|
| Orgalloy LE 6000 | | | | | |
| PA6 B4 | | | | | |
| PA6 B3 | 32 | 32 | 32 | 32 | 32 |
| LL 7209 AA | | | | | |
| EVA 2403 | 30,9 | 30,9 | 30,9 | 30,9 | 30,9 |
| Lotader 3210 | 6,5 | 6,5 | 6,5 | 6,5 | 6,5 |
| Lotader 4700 | | | | | |
| Lotader AX 8900 | | | | | |
| Lucalene M3110 | | | | | |
| Platamid MX 1937 | | | | | |
| FR Cross 484F | | | | | |
| Exolit AP 422 | 18 | 18 | 18 | 18 | 18 |
| EXL 3611 | | | 1 | | |
| Phosphlex 31L | 10 | 10 | 10 | | |
| Phosphflex TPP | | | | 10 | 10 |
| DHT4A | 2 | | 1 | 2 | |
| Siliporite NK10AP | | 2 | | | 2 |
| Anti 51 + Anti 82 (0,5/0,2) | | | | | |
| Iodine P201 | 0,6 | 0,6 | 0,6 | 0,6 | 0,6 |
| | | | | | |

Tableau 1 (suite)

| | Ex 1 | Ex 2 | Ex 3 3 | Ex 4 4 | Ex 5 |
|---|---|---|---|---|---|
| MFI (235°C, 2,16 kg) | 11,9 | 11,8 | 12,7 | 6,6 | 13 |
| UL 94 VB | V0 | V0 | V0 | V0 | V0 |
| LOI | | | | | |
| Allongement rupture (%) | 313 | 338 | 285 | 371 | 348 |
| Contrainte rupture (MPa) | 18,5 | 20,9 | 18,8 | 23,2 | 19,6 |
| Choc multiaxial (23°C)* | | | | | |
| Type de casse | | | | | |
| Allongement rupture ***(%) | 225 | 247 | 159 | 255 | 243 |
| Taux de rétention de l'allongement (%) | 71,88% | 73,08% | 55,79% | 68,73% | 69,83% |
| Contrainte rupture*** (MPa) | 19,1 | 20 | 17,3 | 20,2 | 17,8 |
| Taux de rétention de la contrainte (%) | 103,24% | 95,69% | 92,02% | 87,07% | 90,82% |

* Energie totale (N,m)
** Semi ductile
*** après vieillissement thermique 120°C 1 semaine sous air

Tableau 2

| (exemples comparatifs) | | | | | | | |
|---|---|---|---|---|---|---|---|
| | C Ex 1 | C Ex 2 | C Ex3 | C Ex 4 | C Ex 5 | C Ex 6 | C Ex 7 |
| Orgalloy LE 6000 | | | | | | 59 | |
| PA6 B4 | | | | | | | 45 |
| PA6 B3 | 37 | 44,2 | 45,7 | 32 | 32 | | |
| LL 7209 AA | | 17 | 17,6 | | | | |
| EVA 2403 | 35,4 | | | 30,9 | 30,9 | | |
| Lotader 3210 | 7 | 6,25 | 7 | 6,5 | 6,5 | | |
| Lotader 4700 | | | | | | | 12 |
| Lotader AX 8900 | | | | | | | 6 |
| Lucalene M3110 | | | | | | | 6 |
| Platamid MX 1937 | | | | | | 11 | |
| FR Cross 484F | | 30 | 15 | | | 18 | |
| Exolit AP 422 | | | | 18 | 18 | | 19,3 |
| EXL3611 1 | | | 2 | 2 | 2 | 2 | |
| Phosphlex 31L L | | | 12 | 10 | | 10 | 10 |
| Phosphflex TPP | 18 | | | | 10 | | |
| DHT4A | | | | | | | |
| Siliporite NK10AP | 2 | 2 | | | | | 1 |
| Anti 51 + Anti 82 (0,5/0,2) | | 0,55 | 0,7 | | | | 0,7 |
| Iodine P201 | 0,6 | | | 0,6 | 0,6 | | |
| | | | | | | | |
| MFI (235°C, 2,16 kg) | 3 | | 9 | 16 | 22 | 18 | 1,3 |

Tableau 2 (suite)

| (exemples comparatifs) | | | | | | | |
|---|---|---|---|---|---|---|---|
| | C Ex 1 | C Ex 2 | C Ex3 | C Ex 4 | C Ex 5 | C Ex 6 | C Ex 7 |
| UL 94 VB | V2 | V0 | V0 | V0 | V0 | V0 | V0 |
| LOI | | 39 | | | | | |
| Allongement rupture (%) | 267 | 6 | 136 | 232 | 260 | 175 | 167 |
| Contrainte rupture (MPa) | 22,7 | | 22,4 | 16 | 16,9 | 21,3 | 24 |
| Choc multiaxial (23°C)* | | | | | | 49 | |
| Type de casse | | | | | | SD | |
| Allongement rupture ***(%) | 193 | | 26 | 56 | 58 | 33 | 85 |
| Taux de rétention de l'allongement (%) | 72,30% | | 19,12% | 24,14% | 22,31% | 18,80% | 51% |
| Contrainte rupture*** (MPa) | 25,1 | | | 15,9 | 15,6 | | 26 |
| Taux de rétention de la contrainte (%) | 110,57% | | | 99,38% | 92,31% | | 108% |

* Energie totale (N,m)
** Semi ductile
*** après vieillissement thermique 120°C 1 semaine sous air

## Revendications

**1.** Compositions ignifugées comprenant, en poids, le total étant 100 parties :

50 à 75 parties d'un mélange de polyamide (A) et de polyoléfine (B),
25 à 50 parties d'un mélange comprenant :

0,1 à 48,8 parties d'un agent ignifugeant,
0,1 à 30 parties d'un plastifiant phosphoré,
0,1 à 10 parties d'une zéolithe,

le total de ces 3 produits étant compris entre 25 et 50.

**2.** Compositions selon la revendication 1 comprenant, en poids, le total étant 100 parties :

55 à 75 parties d'un mélange de polyamide (A) et de polyoléfine (B),
25 à 45 parties d'un mélange comprenant :

0,1 à 25 parties d'un agent ignifugeant,
0,1 à 15 parties d'un plastifiant phosphoré,
0,1 à 5 parties d'une zéolithe.

le total de ces 3 produits étant compris entre 25 et 45.

**3.** Compositions selon la revendication 2 comprenant, en poids, le total étant 100 parties :

55 à 75 parties d'un mélange de polyamide (A) et de polyoléfine (B),
25 à 45 parties d'un mélange comprenant :

16 à 25 parties d'un agent ignifugeant,
8 à 15 parties d'un plastifiant phosphoré,
1 à 5 parties d'une zéolithe.

le total de ces 3 produits étant compris entre 25 et 45.

4. Compositions selon l'une quelconque des revendications précédentes dans lesquelles la polyoléfine (B) comprend (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

5. Compositions selon l'une quelconque des revendications précédentes dans lesquelles la polyoléfine (B) comprend (i) un polyéthylène haute densité (HDPE), (ii) un polymère (C2) choisi parmi les élastomères, les polyéthylènes de très basse densité et les copolymères de l'éthylène (C2) étant greffé par un acide carboxylique insaturé et (iii) un polymère (C'2) choisi parmi les élastomères, les polyéthylènes de très basse densité et les copolymères de l'éthylène.

6. Compositions selon l'une quelconque des revendications précédentes dans lesquelles la polyoléfine (B) comprend (i) du polypropylène et (ii) une polyoléfine qui résulte de la réaction d'un polyamide (C4) avec un copolymère (C3) comprenant du propylène et un monomère insaturé X, greffé ou copolymérisé.

7. Compositions selon l'une quelconque des revendications précédentes dans lesquelles la polyoléfine (B) comprend (i) un polyéthylène de type EVA, LLDPE , VLDPE ou metallocene et (ii) un copolymère éthylène-(meth)acrylate d'alkyle -anhydride maléique.

8. Compositions selon l'une quelconque des revendications précédentes dans lesquelles la polyoléfine comprend deux polymères fonctionnalisés comprenant au moins 50 % en moles de motifs éthylène et pouvant réagir pour former une phase réticulée.

9. Compositions selon l'une quelconque des revendications précédentes dans lesquelles l'agent ignifugeant est choisi parmi les phosphates, les pyrophosphates et polyphosphates d'ammonium, les phosphates de mélamine, le phosphite de mélamine, le phosphite et le diphosphite de pipérazine, le phosphate de guanazole, le pyrophoshate de mélamine et le pyrophosphate de pipérazine.

10. Compositions selon l'une quelconque des revendications précédentes dans lesquelles le plastifiant phosphoré est choisi parmi le phosphate d'isopropylphényl, le phosphate de diphényle et le phosphate de triphényle.

11. Compositions selon l'une quelconque des revendications précédentes dans lesquelles la zéolithe est choisie parmi les zéolithes de type 3A, 4A, 5A, 10X et 13X.

**Patentansprüche**

1. Flammgeschützte Zusammensetzungen, enthaltend, bezogen auf das Gewicht, wobei sich die Gesamtmenge auf 100 Teile beläuft:

   50 bis 75 Teile einer Mischung aus Polyamid (A) und Polyolefin (B),
   25 bis 50 Teile einer Mischung, enthaltend:

      0,1 bis 48,8 Teile eines Flammschutzmittels,
      0,1 bis 30 Teile eines phosphorhaltigen Weichmachers,
      0,1 bis 10 Teile eines Zeoliths,

   wobei die Gesamtmenge dieser 3 Produkte zwischen 25 und 50 liegt.

2. Zusammensetzungen nach Anspruch 1, enthaltend, bezogen auf das Gewicht, wobei sich die Gesamtmenge auf 100 Teile beläuft:

   55 bis 75 Teile einer Mischung aus Polyamid (A) und Polyolefin (B),
   25 bis 45 Teile einer Mischung, enthaltend:

      0,1 bis 25 Teile eines Flammschutzmittels,

0,1 bis 15 Teile eines phosphorhaltigen Weichmachers,
0,1 bis 5 Teile eines Zeoliths,

wobei die Gesamtmenge dieser 3 Produkte zwischen 25 und 45 liegt.

**3.** Zusammensetzungen nach Anspruch 2, enthaltend, bezogen auf das Gewicht, wobei sich die Gesamtmenge auf 100 Teile beläuft:

55 bis 75 Teile einer Mischung aus Polyamid (A) und Polyolefin (B),
25 bis 45 Teile einer Mischung, enthaltend:

16 bis 25 Teile eines Flammschutzmittels,
8 bis 15 Teile eines phosphorhaltigen Weichmachers,
1 bis 5 Teile eines Zeoliths,

wobei die Gesamtmenge dieser 3 Produkte zwischen 25 und 45 liegt.

**4.** Zusammensetzungen nach einem der vorhergehenden Ansprüche, in denen das Polyolefin (B) (i) ein Polyethylen hoher Dichte (HDPE) und (ii) eine Mischung aus einem Polyethylen (C1) und einem unter Elastomeren, Polyethylenen niederer Dichte und Ethylen-Copolymeren ausgewählten Polymer (C2) umfaßt, wobei die Mischung aus (C1) + (C2) mit einer ungesättigten Carbonsäure cogepfropft ist.

**5.** Zusammensetzungen nach einem der vorhergehenden Ansprüche, in denen das Polyolefin (B) (i) ein Polyethylen hoher Dichte (HDPE), (ii) ein unter Elastomeren, Polyethylenen niederer Dichte und Ethylen-Copolymeren ausgewähltes Polymer (C2) umfaßt, wobei (C2) mit einer ungesättigten Carbonsäure gepfropft ist, und (iii) ein unter Elastomeren, Polyethylenen niederer Dichte und Ethylen-Copolymeren ausgewähltes Polymer (C'2) umfaßt.

**6.** Zusammensetzungen nach einem der vorhergehenden Ansprüche, in denen das Polyolefin (B) (i) Polypropylen und (ii) ein Polyolefin, das sich aus der Umsetzung eines Polyamids (C4) mit einem Copolymer (C3), das Propylen und ein gepfropftes oder copolymerisiertes ungesättigtes Monomer X enthält, ergibt, umfaßt.

**7.** Zusammensetzungen nach einem der vorhergehenden Ansprüche, in denen das Polyolefin (B) (i) ein Polyethylen vom EVA-, LLDPE-, VLDPE- oder Metallocen-Typ und (ii) ein Ethylen-Alkyl(meth)-acrylat-Maleinsäureanhydrid-Copolymer umfaßt.

**8.** Zusammensetzungen nach einem der vorhergehenden Ansprüche, in denen das Polyolefin zwei funktionalisierte Polymere, die mindestens 50 Mol-% Ethylen-Einheiten enthalten und zu einer vernetzten Phase reagieren können, umfaßt.

**9.** Zusammensetzungen nach einem der vorhergehenden Ansprüche, in denen das Flammschutzmittel unter Ammoniumphosphaten, -pyrophosphaten und -polyphosphaten, Melaminphosphaten, Melaminphosphit, Piperazinphosphit und -diphosphit, Guanazolphosphat, Melaminpyrophosphat und Piperazinpyrophosphat ausgewählt ist.

**10.** Zusammensetzungen nach einem der vorhergehenden Ansprüche, in denen der phosphorhaltige Weichmacher unter Isopropylphenylphosphat, Diphenylphosphat und Triphenylphosphat ausgewählt ist.

**11.** Zusammensetzungen nach einem der vorhergehenden Ansprüche, in denen der Zeolith unter Zeolithen des Typs 3A, 4A, 5A, 10X und 13X ausgewählt ist.

## Claims

**1.** Fire-retarded compositions comprising, by weight, the total being 100 parts:

50 to 75 parts of a blend of a polyamide (A) and a polyolefin (B),
25 to 50 parts of a blend comprising:

0.1 to 48.8 parts of a fire retardant,

0.1 to 30 parts of a phosphorus-containing plasticizer,
0.1 to 10 parts of a zeolite,

the total of these three products being between 25 and 50.

**2.** Compositions according to Claim 1, comprising, by weight, the total being 100 parts:

55 to 75 parts of a blend of a polyamide (A) and a polyolefin (B),
25 to 45 parts of a blend comprising:

0.1 to 25 parts of a fire retardant,
0.1 to 15 parts of a phosphorus-containing plasticizer,
0.1 to 5 parts of a zeolite,

the total of these three products being between 25 and 45.

**3.** Compositions according to Claim 2, comprising, by weight, the total being 100 parts:

55 to 75 parts of a blend of a polyamide (A) and a polyolefin (B),
25 to 45 parts of a blend comprising:

16 to 25 parts of a fire retardant,
8 to 15 parts of a phosphorus-containing plasticizer,
1 to 5 parts of a zeolite,

the total of these three products being between 25 and 45.

**4.** Compositions according to any one of the preceding claims, in which the polyolefin (B) comprises (i) a high-density polyethylene (HDPE) and (ii) a blend of a polyethylene (C1) and a polymer (C2) chosen from elastomers, very low-density polyethylenes and ethylene copolymers, the (C1) + (C2) blend being cografted with an unsaturated carboxylic acid.

**5.** Compositions according to any one of the preceding claims, in which the polyolefin (B) comprises (i) a high-density polyethylene (HDPE), (ii) a polymer (C2) chosen from elastomers, very low-density polyethylenes and ethylene copolymers, (C2) being grafted by an unsaturated carboxylic acid and (iii) a polymer (C'2) chosen from elastomers, very low-density polyethylenes and ethylene copolymers.

**6.** Compositions according to any one of the preceding claims, in which the polyolefin (B) comprises (i) polypropylene and (ii) a polyolefin which results from the reaction of a polyamide (C4) with a copolymer (C3) comprising propylene and an unsaturated monomer X, grafted or copolymerized.

**7.** Compositions according to any one of the preceding claims, in which the polyolefin (B) comprises (i) a polyethylene of the EVA, LLDPE, VLDPE or metallocene type and (ii) an ethylene/alkyl (meth)acrylate/maleic anhydride copolymer.

**8.** Compositions according to any one of the preceding claims, in which the polyolefin comprises two functionalized polymers comprising at least 50 mol% of ethylene units and able to react to form a crosslinked phase.

**9.** Compositions according to any one of the preceding claims, in which the fire retardant is chosen from ammonium phosphates, pyrophosphates and polyphosphates, melamine phosphates, melamine phosphite, piperazine phosphite and diphosphite, guanazole phosphate, melamine pyrophoshate and piperazine pyrophosphate.

**10.** Compositions according to any one of the preceding claims, in which the phosphorus-containing plasticizer is chosen from isopropylphenyl phosphate, diphenyl phosphate and triphenyl phosphate.

**11.** Compositions according to any one of the preceding claims, in which the zeolite is chosen from zeolites of the 3A, 4A, 5A, 10X and 13X type.